# EUROPEAN PATENT APPLICATION

(11) **EP 0 814 100 A1**
(43) Date of publication of application: **29.12.1997**
(21) Application number: 96430006.5
(22) Date of filing: 21.06.1996
(51) Int. Cl.: C08F 10/00, C08F 2/34

(54) **Polymerisation process**

(71) Applicant: BP CHEMICALS S.N.C., 92400 Courbevoie (FR)
(72) Inventor: Chinh, Jean-Claude, 13920 St Mitre les Remparts (FR); Heritier, Jaques, 13960 Sausset les Pins (FR)
(74) Representative: Lassalle, Pierre-Dominique

(57) **Abstract**

Start-up process of a continuous gas fluidised bed process for the polymerisation of olefin monomer selected from (a) ethylene, (b) propylene, (c) mixtures of ethylene and propylene, and (d) one or more other alpha-olefins mixed with (a), (b) or (c) to produce a polymer product in a fluidised bed reactor which process comprises:
(1) continuously recycling a gaseous stream comprising at least some of the olefin monomer through a fluidised bed in said reactor in the presence of a polymerisation catalyst under reactive conditions ;
(2) cooling at least part of said gaseous stream withdrawn from said reactor to a temperature at which liquid condenses out ;
(3) separating at least part of the condensed liquid from the gaseous stream ; and
(4) introducing at least part of the separated liquid directly into the fluidised bed using a liquid injection means arranged at or above the point at which the gaseous stream passing through the fluidised bed has substantially reached the temperature of the gaseous stream being withdrawn from the reactor
   characterised in that at least part of the recycle gaseous stream by-passes the hereabove steps (2) and (3), and is directly reintroduced in the reactor.

## Description

The present invention relates to a start-up process of a continuous gas-phase polymerisation of olefins in a fluidised bed reactor having improved levels of productivity.

Processes for the homopolymerisation and copolymerisation of olefins in the gas phase are well known in the art. Such processes can be conducted for example by introducing the gaseous monomer into a stirred and/or fluidised bed comprising preformed polyolefin and a catalyst for the polymerisation.

In the fluidised bed polymerisation of olefins, the polymerisation is conducted in a fluidised bed reactor wherein a bed of polymer particles are maintained in a fluidised state by means of an ascending gas stream comprising the gaseous reaction monomer. The start-up of such a polymerisation generally employs a bed of preformed polymer particles similar to the polymer which it is desired to manufacture. During the course of polymerisation, fresh polymer is generated by the catalytic polymerisation of the monomer, and polymer product is withdrawn to maintain the bed at more or less constant volume. An industrially favoured process employs a fluidisation grid to distribute the fluidising gas to the bed, and to act as a support for the bed when the supply of gas is cut off. The polymer produced is generally withdrawn from the reactor via a discharge conduit arranged in the lower portion of the reactor, near the fluidisation grid. A small proportion of the monomer tends to remain associated (absorbed or dissolved) in the polymer product. The unconverted monomers may be recovered from the polymer product in a depressurisation zone and may be recycled either directly or indirectly to the fluidised bed reactor. The fluidised bed comprises a bed of growing polymer particles, polymer product particles and catalyst particles. This reaction mixture is maintained in a fluidised condition by the continuous upward flow from the base of the reactor of a fluidising gas which comprises recycle gas from the top of the reactor together with make-up feed.

The fluidising gas enters the bottom of the reactor and is passed, preferably through a fluidisation grid, to the fluidised bed.

The polymerisation of olefins is an exothermic reaction and it is therefore necessary to provide means to cool the bed to remove the heat of polymerisation. In the absence of such cooling the bed would increase in temperature until, for example, the catalyst became inactive or the bed commenced to fuse. In the fluidised bed polymerisation of olefins, the preferred method for removing the heat of polymerisation is by supplying to the polymerisation reactor a gas, preferably the fluidising gas, which is at a temperature lower than the desired polymerisation temperature, passing the gas through the fluidised bed to conduct away the heat of polymerisation, removing the gas from the reactor and cooling it by passage through an external heat exchanger, and recycling it to the bed. The temperature of the recycle gas can be adjusted in the heat exchanger to maintain the fluidised bed at the desired polymerisation temperature. In this method of polymerising alpha olefins, the recycle gas generally comprises the monomeric olefin, optionally together with, for example, diluent gas and/or a gaseous chain transfer agent such as hydrogen. Thus the recycle gas serves to supply the monomer to the bed, to fluidise the bed, and to maintain the bed at the desired temperature. Monomers consumed by the polymerisation reaction are normally replaced by adding make up gas to the recycle gas stream.

It is well known that the production rate (i.e. the space time yield in terms of weight of polymer produced per unit volume of reactor space per unit time) in commercial gas fluidised bed reactors of the afore-mentioned type is restricted by the maximum rate at which heat can be removed from the reactor. The rate of heat removal can be increased for example, by increasing the velocity of the recycle gas and/or reducing the temperature of the recycle gas. However, there is a limit to the velocity of the recycle gas which can be used in commercial practice. Beyond this limit the bed can become unstable or even lift out of the reactor in the gas stream, leading to blockage of the recycle line and damage to the recycle gas compressor or blower. There is also a limit on the extent to which the recycle gas can be cooled in practice. This is primarily determined by economic considerations, and in practise is normally determined by the temperature of the industrial cooling water available on site. Refrigeration can be employed if desired, but this adds to the production costs. Thus, in commercial practice, the use of cooled recycle gas as the sole means of removing the heat of polymerisation from the gas fluidised bed polymerisation of olefins has the disadvantage of limiting the maximum production rates obtainable.

The prior art suggests a number of methods for removing heat from gas fluidised bed polymerisation processes.

GB 1415442 relates to the gas phase polymerisation of vinyl chloride in a stirred or fluidised bed reactor, the polymerisation being carried out in the presence of at least one gaseous diluent having a boiling point below that of vinyl chloride. Example 1 of this reference describes the control of the temperature of polymerisation by the intermittent addition of liquid vinyl chloride to fluidised polyvinyl chloride material. The liquid vinyl chloride evaporated immediately in the bed resulting in the removal of the heat of polymerisation.

US 3625932 describes a process for polymerisation of vinyl chloride wherein beds of polyvinyl chloride particles within a multiple stage fluidised bed reactor are kept fluidised by the introduction of gaseous vinyl chloride monomer at the bottom of the reactor. Cooling of each of the beds to remove heat of polymerisation generated therein is provided by spraying liquid vinyl chloride monomer into the ascending gas stream beneath the trays on which the beds are fluidised.

FR 2215802 relates to a spray nozzle of the non-return valve type, suitable for spraying liquids into fluidised beds, for example in the gas fluidised bed polymerisation of ethylenically unsaturated monomers. The liquid, which is used for cooling the bed, can be the monomer to be polymerised, or if ethylene is to be polymerised, it can be a liquid saturated hydrocarbon. The spray nozzle is described by reference to the fluidised bed polymerisation of vinyl chloride.

GB 1398965 discloses the fluidised bed polymerisation of ethylenically unsaturated monomers, especially vinyl chloride, wherein thermal control of the polymerisation is effected by injecting liquid monomer into the bed using one or more spray nozzles situated at a height between 0 and 75% of that of the fluidised material in the reactor.

US 4390669 relates to homo- or copolymerisation of olefins by a multi-step gas phase process which can be carried out in stirred bed reactors, fluidised bed reactors, stirred fluidised bed reactors or tubular reactors. In this process polymer obtained from a first polymerisation zone is suspended in an intermediate zone in an easily volatile liquid hydrocarbon, and the suspension so obtained is fed to a second polymerisation zone where the liquid hydrocarbon evaporates. In Examples 1 to 5, gas from the second polymerisation zone is conveyed through a cooler (heat exchanger) wherein some of the liquid hydrocarbon condenses (with comonomer if this is employed). The volatile liquid condensate is partly sent in the liquid state to the polymerisation vessel where it is vaporised for utilisation in removing the heat of polymerisation by its latent heat of evaporation. This reference does not state specifically how the liquid is introduced into the polymerisation.

EP 89691 relates to a process for increasing the space time yield in continuous gas fluidised bed processes for the polymerisation of fluid monomers, the process comprising cooling part or all of the unreacted fluids to form a two phase mixture of gas and entrained liquid below the dew point and reintroducing said two phase mixture into the reactor. This technique is referred to as operation in the "condensing mode". The specification of EP89691 states that a primary limitation on the extent to which the recycle gas stream can be cooled below the dew point is in the requirement that gas-to-liquid be maintained at a level sufficient to keep the liquid phase of the two phase fluid mixture in an entrained or suspended condition until the liquid is vaporised, and further states that the quantity of liquid in the gas phase should not exceed about 20 weight percent, and preferably should not exceed about 10 weight percent, provided always that the velocity of the two phase recycle stream is high enough to keep the liquid phase in suspension in the gas and to support the fluidised bed within the reactor. EP 89691 further discloses that it is possible to form a two-phase fluid stream within the reactor at the point of injection by separately injecting gas and liquid under conditions which will produce a two phase stream, but that there is little advantage seen in operating in this fashion due to the added and unnecessary burden and cost of separating the gas and liquid phases after cooling.

EP173261 relates in particular to improvements in the distribution of fluid introduced into fluidised bed reactors and refers in particular to operation in the condensing mode as described in EP89691 (*supra*). More particularly, EP173261 states that operation using an inlet to the base of the reactor (beneath the distribution plate or grid) of the standpipe/conical cap type (as depicted in the drawings of EP89691) is not satisfactory for a condensing mode of operation due to liquid flooding or frothing in the bottom head, a phenomenon experienced with commercial reactors at relatively low levels of liquid in the recycle stream.

WO 94/28032, which is incorporated herein by reference, relates to a continuous gas phase fluidised bed process for the polymerisation of olefin monomer in which the recycle gas stream is cooled to a temperature sufficient to form a liquid and a gas. By separating the liquid from the gas and then feeding the liquid directly to the fluidised bed, the total amount of liquid which may be reintroduced into the fluidised bed polymerisation reactor for the purpose of cooling the bed by evaporation of the liquid can be increased thereby enhancing the level of cooling to achieve higher levels of productivity. At the early stage of the polymerisation, i.e. when the production rate is very low, there are only a few centigrades of difference between the temperature of the cold recycling gas and the temperature inside the reactor. This temperature difference increases with the production rate and condensation of the gas occurs when a minimum level of productivity is reached. Beyond this point, the heat of polymerisation from the exothermic reaction is removed thanks to both the cold recycling gas and the separated liquid which is reintroduced in the fluidised bed.
As disclosed in WO 94/28032, a major concern regarding the introduction of the separated liquid inside the fluidised bed is not to adversely affect the fluidisation of the bed or the quality of the product. In this way it would be advantageous to begin with the introduction of the separated liquid into the fluidised bed at the early stage of the polymerisation, i.e. at lower production rates.

We have now found that by providing the recycle gas stream line with a by-pass of the cooling/separating steps, it is possible to early condense part of the recycle gas stream and introduce said condensed liquid into the fluidised bed at low production rate. The control of the reaction is thereby more easily maintained in steady state during the start-up of the process.

Thus, according to the present invention there is provided a start-up process of a continuous gas fluidised bed process for the polymerisation of olefin monomer selected from (a) ethylene, (b) propylene, (c) mixtures of ethylene and propylene, and (d) one or more other alpha-olefins mixed with (a), (b) or (c) to produce a polymer product in a fluidised bed reactor which process comprises:
(1) continuously recycling a gaseous stream comprising at least some of the olefin monomer through a fluidised bed in said reactor in the presence of a polymerisation catalyst under reactive conditions ;
(2) cooling at least part of said gaseous stream withdrawn from said reactor to a temperature at which liquid condenses out ;
(3) separating at least part of the condensed liquid from the gaseous stream ; and
(4) introducing at least part of the separated liquid directly into the fluidised bed using a liquid injection means arranged at or above the point at which the gaseous stream passing through the fluidised bed has substantially reached the temperature of the gaseous stream being withdrawn from the reactor ;
   characterised in that at least part of the recycle gaseous stream by-passes the hereabove steps (2) and (3), and is directly reintroduced in the reactor.

According to a preferred embodiment of the present invention, the by-pass gas stream is reintroduced in the reactor below the bed together with the cold separated recycle gaseous stream.

According to the present invention the amount of liquid directly injected into the fluidised bed may be controlled by regulating the proportion of the gaseous stream which is cooled to form the two phase mixture.

By use of the process according to the present invention the reaction control is maintained in steady state. Also start-up of the injection of liquid may be carried out at low plant throughput and switchover from conventional operation can be carried out at low capacities when the fluidised bed is not very active.

Although the process of the present invention is directed to start-up operation, the use of the by-pass may also be suitable for the continuous polymerization process as a control on the amount of liquid injected into the fluidised bed as well as a control of the gas temperature. The amount of recycle gaseous stream passing through the by-pass is preferably regulated by an automatic valve as indicated in the accompanying drawings.

The minimal amount of recycle gaseous stream passing through the by-pass during the start-up procedure represents at least 5% of the total recycle gaseous stream, preferably at least 10 %. Although there is no upper limit for this by-pass amount, it is preferred to limit it to 60 %, preferably to 50 %.

The better reaction control during the start-up procedure is not the only advantage provided by the present invention. Indeed, the Applicants have also found that the flexibility and the short time response provided by the start-up process of the present invention allows a better temperature control of the reaction ; it is now possible to work closer to the thermal exchange limits, i.e. at superior production rates.

The gaseous recycle stream withdrawn from the reactor generally comprises unreacted gaseous monomer(s), and optionally, inert hydrocarbon(s), reaction activator(s) or moderator(s) such as nitrogen and C₂-C₈ alkane or cycloalkane, and hydrogen as well as entrained catalyst and polymer particles (hereafter referred to as "fines"). The recycled gaseous stream fed to the reactor additionally comprises sufficient make-up monomers to replace those monomers polymerised in the reactor.

The process according to the present invention is suitable for the manufacture of polyolefins in the gas phase by the polymerisation of one or more olefins at least one of which is ethylene or propylene. Preferred alpha-olefins used in combination with ethylene and/or propylene in the process of the present invention are those having from 4 to 8 carbon atoms. However, small quantities of alpha olefins having more than 8 carbon atoms, for example 9 to 18 carbon atoms (e.g. a conjugated diene), can be employed if desired. Thus it is possible to produce homopolymers of ethylene or propylene or copolymers of ethylene and/or propylene with one or more C₄-C₈ alpha-olefins. The preferred alpha-olefins are but-l-ene, pent-l-ene, hex-l-ene, 4-methylpent-l-ene, oct-l-ene and butadiene. Examples of higher olefins that can be copolymerised with the primary ethylene and/or propylene monomer, or as partial replacement for the C₄-C₈ monomer are dec-1-ene and ethylidene norbornene.

When the process is used for the copolymerisation of ethylene or propylene with alpha-olefins the ethylene or propylene is present as the major component of the monomers, and preferably is present in an amount at least 50%, more preferably at least 70% of the total monomers.

The process according to the present invention may be used to prepare a wide variety of polymer products for example linear low density polyethylene (LLDPE) based on copolymers of ethylene with but-1-ene, 4-methylpent-1-ene or hex-1-ene and high density polyethylene (HDPE) which can be for example, homopolyethylene or copolymers of ethylene with a small portion of higher alpha olefin, for example, but-1-ene, pent-1-ene, hex-1-ene or 4-methylpent-1-ene.

The liquid which condenses out of the recycle gaseous stream can be a condensable monomer, e.g. but-1-ene, hex-1-ene, octene used as a comonomer for the production of LLDPE or may be an inert condensable liquid, e.g. inert hydrocarbon(s), such as C₄-C₈ alkane(s) or cycloalkane(s), particularly butane, pentane or hexane.

It is important that the liquid should vaporise within the bed under the polymerisation conditions being employed so that the desired cooling effect is obtained and to avoid substantial accumulation of liquid within the bed. Suitably at least 95, preferably at least 98 weight percent and most preferably substantially all of the liquid fed to the bed evaporates therein. In the case of liquid comonomers, some of the comonomer polymerises in the bed, and such polymerisation can be from the liquid and the gas phase. Associated olefin monomer can readily be tolerated within the bed provided that the quantities do not adversely affect the fluidisation characteristics of the bed.

The process is particularly suitable for polymerising olefins at an absolute pressure of between 0.5 and 6 MPa and at a temperature of between 30°C and 130 °C. For example for LLDPE production the temperature is suitably in the range 80-95^{o}C and for HDPE the temperature is typically 85-110^{o}C depending on the activity of the catalyst used.

The polymerisation reaction may be carried out in the presence of a catalyst system of the Ziegler-Natta type, consisting of a solid catalyst essentially comprising a compound of a transition metal and of a cocatalyst comprising an organic compound of a metal (i.e. an organometallic compound, for example an alkylaluminium compound). High-activity catalyst systems have already been known for a number of years and are capable of producing large quantities of polymer in a relatively short time, and thus make it possible to avoid a step of removing catalyst residues from the polymer. These high-activity catalyst systems generally comprise a solid catalyst consisting essentially of atoms of transition metal, of magnesium and of halogen. The process is also suitable for use with metallocene catalysts and Ziegler catalysts supported on silica. It is also possible to use a high-activity catalyst consisting essentially of a chromium oxide activated by a heat treatment and associated with a granular support based on a refractory oxide.

The catalyst may suitably be employed in the form of a prepolymer powder prepared beforehand during a prepolymerisation stage with the aid of a catalyst as described above. The prepolymerisation may be carried out by any suitable process, for example, polymerisation in a liquid hydrocarbon diluent or in the gas phase using a batch process, a semi-continuous process or a continuous process.

The recycle gaseous stream is cooled by means of heat exchanger(s) to a temperature such that liquid is condensed in the gas stream. Suitable heat exchangers are well known in the art.

The gaseous stream leaving the top of the reactor can entrain a quantity of catalyst and polymer particles and these may be removed from the recycle gaseous stream by means of a cyclone. A small proportion of these fines or particles may remain entrained in the recycle gaseous stream and, after cooling and separating of the liquid from the gas, reintroduced into the fluidised bed together with the separated liquid stream.

The recycle gas stream may also comprise inert hydrocarbons used for the injection of catalyst, reaction activators or moderators into the reactor.

Make-up monomers for example ethylene to replace monomers consumed by the polymerisation reaction may he added to the recycle gas stream at any suitable location.

Condensable monomers, for example, but-1-ene, hex-1-ene, 4-methylpent-1-ene and octene, which can, for example, be used as comonomers for the production of LLDPE, or inert condensable liquids, for example, pentane, isopentane, butane and hexane, may be introduced as liquids.

Inert condensable liquids, for example, pentane may for example be injected into the recycle gaseous stream between the heat exchanger and the separator. For the preparation of LLDPE, the comonomer, for example, but-1-ene can, if desired, be injected into the recycle gaseous stream before passage to the heat exchanger.

Suitable means for separating the liquid are for example cyclone separators, large vessels which reduce the velocity of the gas stream to effect separation (knock-out drums), demister type gas-liquid separators and liquid scrubbers, for example, venturi scrubbers. Such separators are well known in the art.

The use of a demister type of gas-liquid separator is particularly advantageous in the process of the present invention.

A further advantage of using a demister type of separator is that the pressure drop within the separator can be lower than in other types of separators thereby enhancing the efficiency of the overall process.

A plurality of liquid injection means may be used to introduce the separated liquid and the fines into the fluidised bed. The liquid injection means are arranged such that the local concentration of liquid does not adversely affect the fluidisation of the bed or the quality of the product, and to enable the liquid to disperse rapidly from each liquid injection means and vaporise in the bed to remove the heat of polymerisation from the exothermic reaction. In this way the amount of liquid introduced for cooling purposes may much more closely approach the maximum loading that can be tolerated without disturbing the fluidisation characteristics of the bed and hence offers the opportunity to achieve enhanced levels of reactor productivity.

The liquid and fines can, if desired, be introduced into the fluidised bed using liquid injection means arranged at different heights within the bed. Such a technique can facilitate improved control over comonomer incorporation. Controlled metering of liquid into the fluidised bed provides useful additional control over the temperature profile of the bed and, in the case that the liquid contains comonomer, provides useful control over the comonomer incorporation into the copolymer.

The liquid injection means or plurality of injections means are preferably arranged in the lower part of the region of the fluidised bed at which the recycle gaseous stream has substantially reached the temperature of the gaseous stream being withdrawn from the reactor. Commercial processes for the gas fluidised bed polymerisation of olefins are generally operated under substantially isothermal, steady state conditions. However, although at least a major portion of the fluidised bed is maintained at the desired substantially isothermal polymerisation temperature, there normally exists a temperature gradient in the region of the bed immediately above the point of introduction of the cooled recycle gaseous stream into the bed. The lower temperature limit of this region wherein the temperature gradient exists is the temperature of the incoming cool recycle gas stream, and the upper limit is the substantially isothermal bed temperature. In commercial reactors of the type which employ a fluidisation grid, this temperature gradient normally exists in a layer of about 15 to 30 cm (6 to 12 inches) above the grid.

In order to gain the maximum benefit of the cooling of the separated liquid it is important that the liquid injection means is arranged in the bed above the region where this temperature gradient exists, i.e. in the part of the bed which has substantially reached the temperature of the gaseous stream leaving the reactor.

The liquid injection means may for example be approximately 50-70 cm above the fluidisation grid.

It is important to ensure that the temperature within the fluidised bed is maintained at a level which is below the sintering temperature of the polyolefin constituting the bed.

The gas from the separator is recycled to the bed, normally into the bottom of the reactor. If a fluidisation grid is employed, such recycle is normally to the region below the grid, and the grid facilitates uniform distribution of the gas to fluidise the bed. The use of a fluidisation grid is preferred.

The gas velocity in the fluidised bed must be greater than or equal to that required for fluidisation of the bed. The minimum gas velocity is generally approximately 6 cm/see but the process of the present invention is preferably carried out using a gas velocity in the range 40 to 100, most preferably 50 to 70 cm/sec.

The catalyst or prepolymer can, if desired, be introduced into the fluidised bed directly with the separated liquid stream. This technique can lead to improved dispersion of the catalyst or prepolymer in the bed.

If desired, liquid or liquid-soluble additives, for example, activators, cocatalysts and the like, can be introduced into the bed together with the condensed liquid.

Where the polymer product is an ethylene homo- or copolymer, make-up ethylene, for example, to replace the ethylene consumed during the polymerisation, may be advantageously introduced into the separated gas stream prior to its reintroduction into the bed (for example below the fluidisation grid if such is employed). By adding the make-up ethylene to the separated gas stream rather than into the recycle gaseous stream before separation, the quantity of liquid which may be recovered from the separator may be increased and the productivity improved.

The separated liquid stream may be subjected to additional cooling (e.g. using refrigeration techniques) before being introduced into the fluidised bed. This allows an even greater cooling effect in the bed than is provided by the liquid evaporative effect (latent heat of evaporation) alone, thereby providing further potential increases in productivity of the process. Cooling of the separated liquid stream may be achieved by use of suitable cooling means e.g. a simple heat exchanger or refrigerator located between the separator and the reactor. By cooling the liquid before introduction into the fluidised bed, any tendency for catalyst or prepolymer which may be contained in the liquid stream to cause polymerisation before introduction into the bed will be reduced.

A preferred arrangement for introduction of the liquid to the fluidised bed is to provide a plurality of liquid injection means substantially equally spaced in the fluidised bed in the region of the introduction of the liquid. The number of liquid injection means used is that number which is required to provide sufficient penetration and dispersion of liquid at each liquid injection means to achieve good dispersion of liquid across the bed. A preferred number of liquid injection means is four.

Each of the liquid injection means may, if desired, be supplied with the separated liquid by means of a common conduit suitably arranged within the reactor. This can be provided, for example, by means of a conduit passing up through the centre of the reactor.

The liquid injection means are preferably arranged such that they protrude substantially vertically into the fluidised bed, but may be arranged such that they protrude from the walls of the reactor in a substantially horizontal direction.

The rate at which the liquid can be introduced into the bed depends primarily on the degree of cooling desired in the bed, and this in turn depends on the desired rate of production from the bed. The rates of production obtainable from commercial fluidised bed polymerisation processes for the polymerisation of olefins depend, inter alia on the activity of the catalysts employed, and on the kinetics of such catalysts. Thus for example, when catalysts having very high activity are employed, and high production rates are desired, the rate of liquid addition will be high. Typical rates of liquid introduction may be, for example, in the range 0.3 to 4.9 cubic metres of liquid per cubic metre of bed material per hour, or even higher. For conventional Ziegler catalysts of the "superactive" type (i.e. those based on transition metal, magnesium halide and organometallic cocatalyst, the rate of liquid addition may be, for example, in the range 0.5 to 1.5 cubic metres of liquid per cubic metre of bed material per hour.

In the process of the present invention the weight ratio of liquid:total gas which may be introduced into the bed can be for example in the range 1:100 to 2:1, preferably in the range 5:100 to 85:100, most preferably in the range 6:100 to 25:100. By total gas is meant the gas which is returned to the reactor to fluidise the bed together with any gas used to assist in the operation of the liquid injection means, e.g. atomising gas.

By injecting the liquid into the fluidised bed in this way any catalyst which is present in the liquid may benefit from the localised cooling effect of the liquid penetration surrounding each liquid injection means which may avoid hot spots and consequent agglomeration.

The preferred injection means is a nozzle or a plurality of nozzles which include gas-induced atomising nozzles in which a gas is used to assist in the injection of the liquid, or liquid-only spray-type nozzles.

According to another aspect of the present invention there is provided a start-up process of a continuous gas fluidised bed process for the polymerisation of olefin monomer selected from (a) ethylene, (b) propylene, (c) mixtures of ethylene and propylene, and (d) one or more other alpha-olefins mixed with (a), (b) or (c) to produce a polymer product in a fluidised bed reactor which process comprises:
(1) continuously recycling a gaseous stream comprising at least some of the olefin monomer through a fluidised bed in said reactor in the presence of a polymerisation catalyst under reactive conditions ;
(2) cooling at least part of said gaseous stream withdrawn from said reactor to a temperature at which liquid condenses out ;
(3) separating at least part of the condensed liquid from the gaseous stream ; and
(4) introducing at least part of the separated liquid directly into the fluidised bed using one or more gas-induced atomising nozzles or one or more liquid-only nozzles arranged at or above the point at which the gaseous stream passing through the fluidised bed has substantially reached the temperature of the gaseous stream being withdrawn from the reactor
   characterised in that at least part of the recycle gaseous stream by-passes the hereabove steps (2) and (3), and is directly reintroduced in the reactor.

The liquid injection means are suitably nozzles which protrude into the bed through the reactor wall (or through a supporting grid for the bed) and which carry one or more jet outlets to deliver the liquid to the bed.

The direction of motion of the one or more liquid/gas jets into the bed is preferably substantially horizontal. In the case that one or more of the jet outlets deliver the liquid/gas jets in a direction other than horizontal, preferably these are directed at an angle not greater than 45°, most preferably not more than 20° to the horizontal.

The one or more nozzles are suitably each equipped with one or more jet outlets. The number of nozzles, and the number and distribution of the jet outlets are important factors in obtaining good distribution of liquid within the bed. If a plurality of nozzles are employed, they are preferably vertically disposed and spaced horizontally and substantially equidistant from one another. In this case, they are also preferably spaced equidistant from one another and from the vertical wall of the fluidised bed. The number of nozzles per 10 square metres of the horizontal cross-sectional area of the bed is preferably in the range 1 to 4, most preferably in the range 2 to 3. Where the calculated number is not an integer, it is preferably rounded up to an integer. The number of jet outlets in each nozzle is preferably in the range 1 to 40 most preferably in the range 3 to 16. In the case that the nozzle contains more than one jet outlet, the jet outlets are preferably arranged circumferentially and equidistant from one another around the nozzle.

Each nozzle may be provided with a plurality of outlets of suitable configuration. The outlets may for example comprise circular holes, slots, ellipsoids or other suitable configurations. Each nozzle may comprise a plurality of outlets of varying configuration.

As indicated above, the jets of liquid may consist solely of liquid or may comprise a liquid/gas mixture. Such gas may be merely carried in the liquid, or may be employed to atomise the liquid, or to provide motive force to propel the liquid.

Suitable nozzles for use in the process according to the present invention are described in WO94/28032, the contents of which are hereby incorporated by reference.

The velocity of the liquid is preferably maintained at a velocity sufficient to ensure that the fines do not separate out of the liquid stream.

It is important that the outlet of the nozzles are of sufficient size to allow for the passage of the fines which are present in the separated liquid stream. Further, the size of the outlets is preferably such that there is little pressure drop through the outlets. The slots may typically he of a size equivalent to a hole of diameter of at least 5 mm.

The outlets are preferably symmetrically arranged around the circumference of each nozzle but may also be arranged asymmetrically therein.

Processes according to the present invention will now be illustrated with reference to the accompanying drawings.

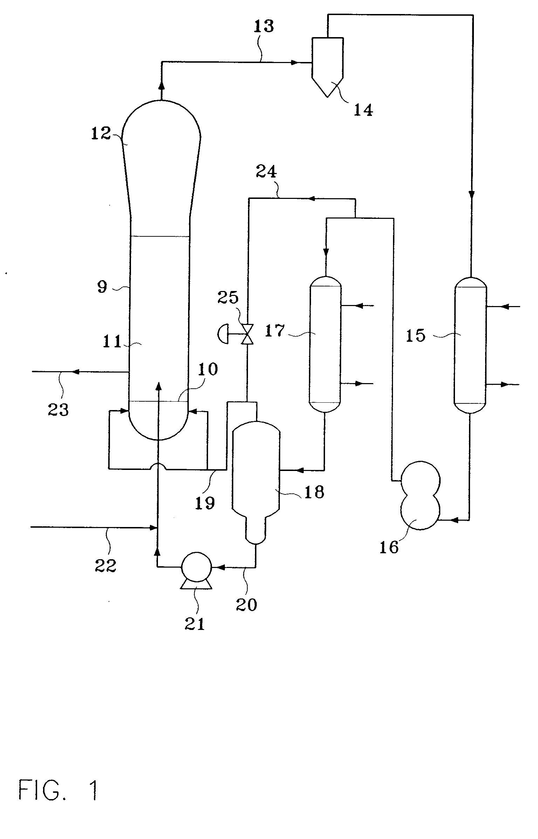

Figures 1-3 show diagrammatically processes according to the present invention.

Figure 1 illustrates a gas-phase fluidised bed reactor consisting essentially of a reactor body 9 which is generally an upright cylinder having a fluidisation grid 10 located in its base. The reactor body comprises a fluidised bed 11 and a velocity reduction zone 12 which is generally of increased cross-section compared to the fluidised bed.

The gaseous reaction mixture leaving the top of the fluidised bed reactor constitutes recycle gaseous stream and is passed via line 13 to a cyclone 14 for the separation of the majority of the fines. Removed fines may suitably be returned to the fluidised bed. The recycle gaseous stream leaving the cyclone passes to a first heat exchanger 15 and a compressor 16. A second heat exchanger 17 is present to remove the heat of compression after the recycle gaseous stream has passed through the compressor 16 and also to cool the recycle stream to a temperature such that a condensate is formed.

The heat exchanger or exchangers can be arranged either upstream or downstream of the compressor 16.

After compression and cooling to a temperature such that a condensate is formed, the resultant gas-liquid mixture is passed to the separator 18 where the liquid is removed.

The gas leaving the separator is recycled via line 19 to the bottom of the reactor 9. The gas is passed via the fluidisation grid 10 to the bed thereby ensuring that the bed is maintained in a fluidised condition.

The separated liquid from the separator 18 is passed via line 20 to the reactor 9. A pump 21 is suitably located in line 20.

Catalyst or prepolymer are fed to the reactor via line 22 into the separated liquid stream.

Product polymer particles are removed from the reactor via line 23.

As shown in Figure 1, part of the recycle gaseous stream by-passes the heat exchanger 17 and the separator 18 by passing through line 24 ; said part of recycle gaseous stream is introduced in line 19 with the cold recycle gaseous stream and is recycled to the bottom of the reactor 9.

The arrangement shown in Figure 1 is particularly suitable for use when retrofitting existing gas phase polymerisation reactors using fluidised bed processes.

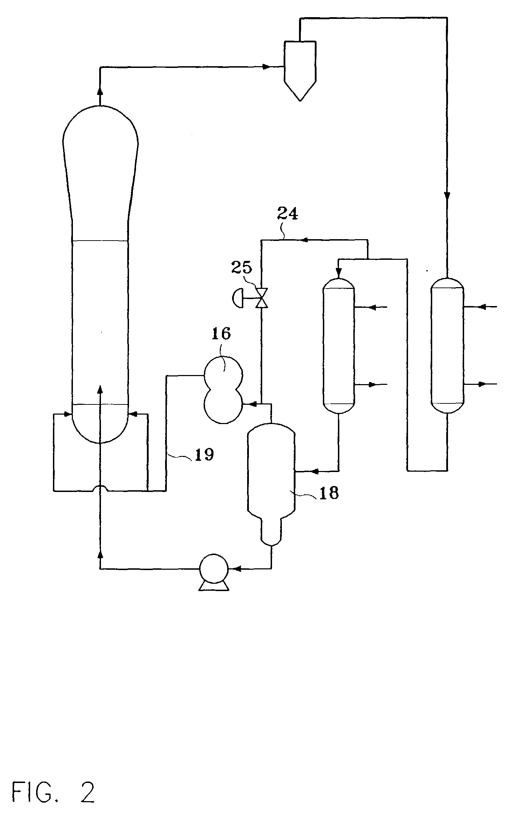

Figure 2 illustrates an alternative arrangement for performing the process of the present invention. In this arrangement the compressor 16 is located in line 19 after separation of the recycle gaseous stream by the separator 18. This has the advantage that the compressor has a reduced quantity of gas to compress and can therefore be of reduced size achieving a better process optimisation and cost.

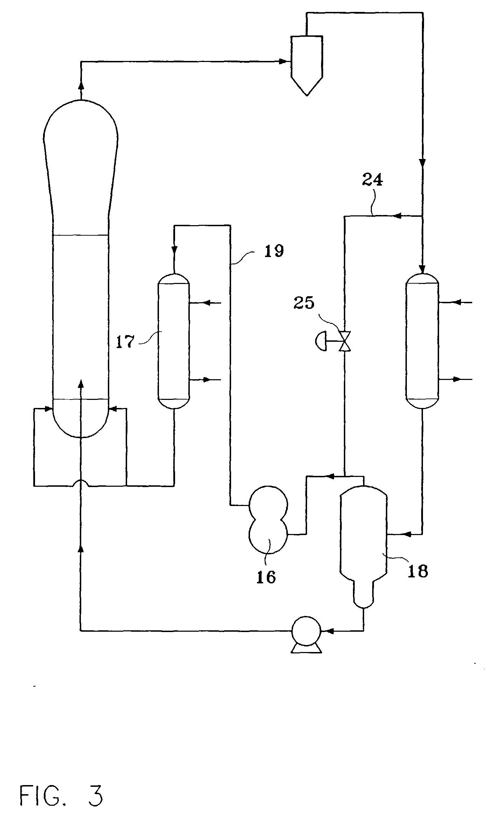

Figure 3 illustrates a further arrangement for performing the process of the present invention whereby the compressor 16 is again arranged in line 19 after the separator 18 but before the second heat exchanger 17 which is located in the separated gas stream rather than located before the separator. Again this arrangement gives a better process optimisation.

## Claims

1. Start-up process of a continuous gas fluidised bed process for the polymerisation of olefin monomer selected from (a) ethylene, (b) propylene, (c) mixtures of ethylene and propylene, and (d) one or more other alpha-olefins mixed with (a), (b) or (c) to produce a polymer product in a fluidised bed reactor which process comprises:
(1) continuously recycling a gaseous stream comprising at least some of the olefin monomer through a fluidised bed in said reactor in the presence of a polymerisation catalyst under reactive conditions ;
(2) cooling at least part of said gaseous stream withdrawn from said reactor to a temperature at which liquid condenses out ;
(3) separating at least part of the condensed liquid from the gaseous stream ; and
(4) introducing at least part of the separated liquid directly into the fluidised bed using a liquid injection means arranged at or above the point at which the gaseous stream passing through the fluidised bed has substantially reached the temperature of the gaseous stream being withdrawn from the reactor
characterised in that at least part of the recycle gaseous stream by-passes the hereabove steps (2) and (3), and is directly reintroduced in the reactor.

2. A process according to claim 1 wherein the one or more other alpha-olefins have from 4 to 8 carbon atoms.

3. A process according to any one of claims 1 or 2 wherein the liquid injection means is one or more gas-induced atomising nozzles or one or more liquid-only nozzles.
